# EUROPEAN PATENT SPECIFICATION

(11) **EP 3 030 051 B1**
(45) Date of publication and mention of the grant of the patent: **19.09.2018**
(21) Application number: 14196263.9
(22) Date of filing: 04.12.2014
(51) Int. Cl.: H05B 33/08, H05B 37/02

(54) **Signal converter circuit for dimming of a light source**
Signalumsetzerschaltung zum Dimmen eines Leuchtmittels
Circuit convertisseur de signaux pour la gradation d'une source de lumière

(43) Date of publication of application: 08.06.2016
(73) Proprietor: Yu Jing Energy Technology Co., Ltd, New Taipei City 23941 (TW)
(72) Inventor: YANG, Sen-Tai, 23941 New Taipei City (TW)
(74) Representative: Roman, Alexis

(56) References cited:
- EP-A1- 2 482 617
- WO-A2-2011/107280
- WO-A2-2011/126374
- WO-A2-2012/021060
- CN-U- 202 276 494
- DE-A1-102004 020 216
- GB-A- 2 260 039

## Description

### BACKGROUND OF THE INVENTION

### 1. Field of the Invention

The invention relates to a circuit structure for controlling a light source and, more particularly, to a circuit structure that can be connected to either a variable resistor or a DC voltage source to control LED light sources and further provides protection against reversed voltage polarities and overvoltage.

### 2. Description of the Prior Art

Among dimmer circuits used for conventional light source elements (such as incandescent lamps), one simple control method is to directly connect a variable resistor in series between a power supply and the light source element. The resistance of the variable resistor is changed as needed to control the current flowing through the light source element, thus controlling the brightness of the light source element.

Another approach involves converting an external AC power supply into a DC voltage (or PWM) control signal. By applying variable DC voltages (or the PWM signal) to a constant load (the traditional light source element), the brightness of the light source element can then be controlled.

Since conventional light source elements and LED elements are significantly different in terms of light-emitting principles and electrical characteristics, the aforementioned dimmer circuits cannot be applied directly on lightings using LEDs as the light source. If such a dimmer circuit is to be used for adjusting the brightness of a LED, then a converting circuit has to be specially designed according to the original control method (resistive, voltage or PWM type) used by the dimmer circuit. The converting circuit is then coupled between the dimmer circuit and the LED element to convert a control signal (changes in resistance, voltage or PWM) output by the dimmer circuit into a control signal suitable for controlling the brightness of the LED element.

However, the above converting circuit typically has the following shortcomings:
1. Since the converting circuits are specially designed according to the control methods (resistive, voltage or PWM type) of the dimmer circuits, such converting circuits for different types of dimmer circuits have to be developed separately and cannot be used interchangeably. This lengthens the development time course and increases the cost, so it is not economical.
2. During the assembly process of the converting circuit and the dimmer circuit, if there is an operational error (e.g. voltage polarities are reversed) or usage error (e.g. voltage is too high), circuit components may be damaged. In order to prevent such damages, a complicated protection mechanism (circuit) is required in the converting circuit. This kind of protection mechanism (circuit) will inevitably increase the overall cost.

In view of the shortcomings in the conventional converting circuits when in actual use, the present invention is proposed to effectively reduce the production cost and increase foolproof protection.

WO 2012/021060 A2 discloses an interface circuit which is compatible with three existing interfaces which are DALI, an analog interface 0-10V and a main supply, whereby the latter can either be provided by operating via a conventional lighting switch or push button.

CN 202 276 494 U discloses a circuit structure for receiving and converting control signals according to the preamble of claim 1.

### SUMMARY OF THE INVENTION

One main objective of the present invention is to provide an circuit structure for receiving and converting control signals output by either a variable resistor or a DC voltage source dimmer circuit in order to control energy-efficient LED light sources, so that various dimmer circuits used for conventional light sources can also be used to control LED light sources, thereby reducing product development and production costs and increasing the overall economic benefits.

Another objective of the present invention is to provide an circuit structure that protects the circuit components from reversed voltage polarities and overvoltage to prevent damage caused by production or operational errors.

This object is achieved by the circuit structure of claim 1.
The circuit structure according to the invention is for receiving and converting control signals set by either a variable resistor or a DC voltage source connected between a first terminal and a second terminal of the circuit structure for controlling a light source, wherein the light source power supply circuit drives, via output ends, the light source to emit light, the circuit structure comprising: a control circuit module provided between a positive terminal and a negative terminal of a DC power supply, the control circuit module including an input end for receiving a sensing signal and an output end for outputting a control signal; a protection circuit including a first resistor, a second resistor, a first diode, a second diode and a third diode, wherein one end of the first resistor is connected to the positive terminal of the DC power supply, while the other end of the first resistor is connected at a node A, the second resistor is provided between the node A and the input end of the control circuit module. The circuit structure further comprises an optocoupler including an input end connected to the output end of the control circuit module, the optocoupler further including two output ends connectable to input ends of the light source power supply circuit, output ends of the light source power supply circuit being connectable to the light source, wherein the optocoupler receives and converts the control signal from the control circuit module into an operating signal to be outputted, the operating signal is then receivable by the light source power supply circuit to generate different outputs that allow changes in the brightness of the light source. The other end of the first resistor is connected to the anode of the first at the node A, the cathode of the first diode is connected to the first terminal, the cathode of second diode is connected to the positive terminal of the DC power supply, while the anode of the second diode is connected to the second terminal, the cathode of third diode is connected to the input end of the control circuit module, while the anode of the third diode is connected to the second terminal.

In the above structure, preferably the input end of the control circuit module is further connected to the negative terminal of the DC power supply via a capacitor, such that the capacitor forms a RC circuit with the second resistor.

In the above structure, preferably a protection circuit further includes an overload protection element provided between the second terminal of the control input end and the negative terminal of the DC power supply

In the above structure, preferably an overload protection element is included between the second terminal of the control input end and the negative terminal of the DC supply VDC and wherein the overload protection element is a fuse. In the above structure, preferably an overload protection element is included between the second terminal of the control input end and the negative terminal of the DC supply VDC and wherein the overload protection element is a thermistor with a positive temperature coefficient.

In the above structure, preferably the light source is a light emitting diode.

In the above structure, preferably the control circuit module is a circuit structure with a built-in current source.

The accomplishment of this and other objectives of the invention will become apparent from the following description and its accompanying drawings of which:

### BRIEF DESCRIPTION OF THE DRAWINGS

- FIG. 1: is a basic circuit structure diagram of a first embodiment of the present invention.
- FIG. 2: is a circuit diagram of the first embodiment of the present invention connected with a variable-resistive dimmer mechanism.
- FIG. 3: is a circuit diagram of the first embodiment of the present invention connected with a voltage drive dimmer circuit.
- FIG. 4: is a circuit diagram of FIG. 3 when voltage polarities are reversed.
- FIG. 5: is a basic circuit structure diagram of an example for understanding the present invention.
- FIG. 6: is a basic circuit structure diagram of a further example for understanding the present invention.

### DETAILED DESCRIPTION OF THE PREFERRED EMBODIMENT

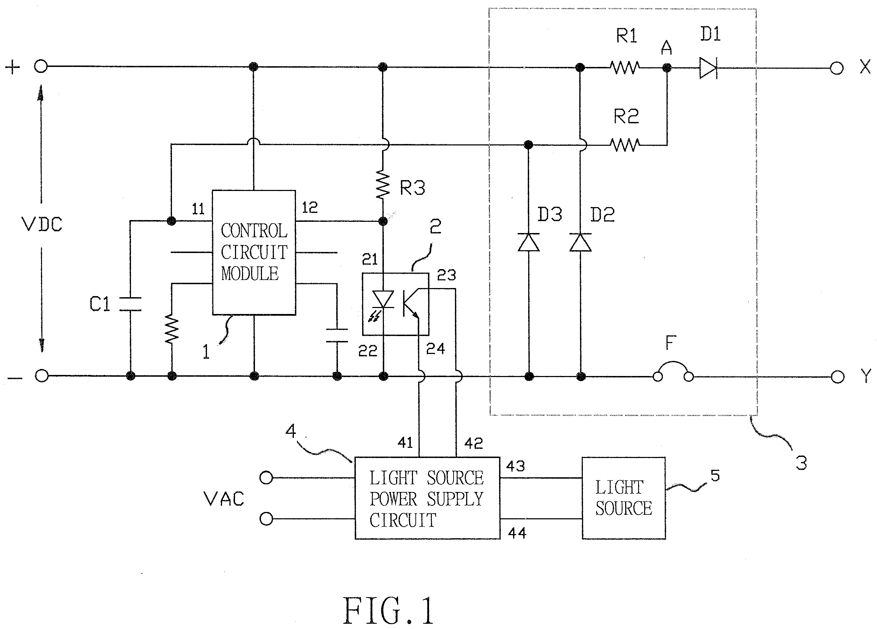

Referring to FIG. 1, a circuit structure in accordance with a first embodiment of the present invention essentially includes: a control circuit module 1, an optocoupler 2 and a protection circuit 3. The control circuit module 1 is provided between the positive and the negative terminals of a DC power supply VDC. The control circuit module 1 has an input end 11 for receiving a sensing signal and an output end 12 for outputting a control signal.

The optocoupler 2 includes an input end 21 connected to the output end 12 of the control circuit module 1, and another input end 22 connected to the negative terminal of the DC power supply VDC. The optocoupler 2 includes two output ends 23 and 24 connected to input ends 41 and 42 of a light source power supply circuit 4, respectively.

In one implementation, the light source power supply circuit 4 includes output ends 43 and 44 connected to a light source 5 (which can be a LED). The light source power supply circuit 4 is able to convert an external AC power supply VAC into a DC power required for illumination of the light source 5 under the control of the optocoupler 2.

The protection circuit 3 includes a first resistor R1, a second resistor R2, a first diode D1, a second diode D2 and a third diode D3. The first resistor R1 is connected to the positive terminal of the DC power supply VDC at one end, while the other end of the first resistor R1 is connected to the anode of the first diode D1 at a node A. The cathode of the first diode D1 is connected to a first terminal X of a control input end. The second resistor R2 is provided between the node A and the input end 11 of the control circuit module 1. The cathode of second diode D2 is connected to the positive terminal of the DC power supply VDC, while the anode of the second diode D2 is connected to a second terminal Y of the control input end. The cathode of third diode D3 is connected to the input end 11 of the control circuit module 1, while the anode of the third diode D3 is connected to the second terminal Y of the control input end.

In one implementation, a current-limiting third resistor R3 is provided between the input end 21 of the optocoupler 2 and the positive terminal of the DC power supply VDC. The input end 11 of the control circuit module 1 is further connected to the negative terminal of the DC power supply VDC via a capacitor C1. As such, the capacitor C1 forms a RC circuit with the second resistor R2.

In practice, the first and the second terminals X and Y of the control input end are connected to two output terminals of an external dimmer mechanism or circuit. The operations of the above circuit in accordance with the present invention will now be explained with respect to dimmer mechanisms or circuits with different drive modes.

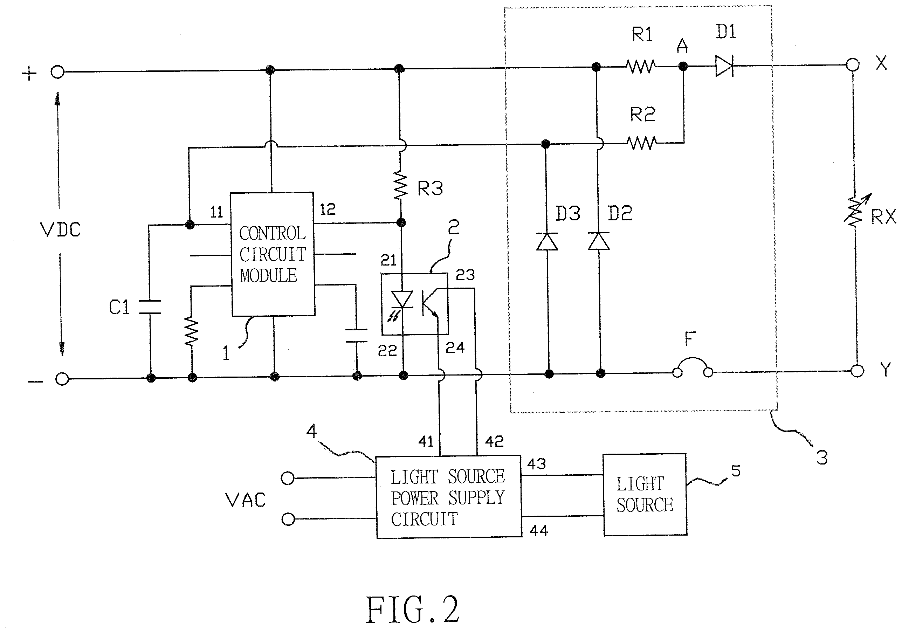

Referring now to FIG. 2, the circuit structure in accordance with the first embodiment of the present invention is connected with a dimmer mechanism having a variable resistive characteristic. This can be regarded as adding a (variable) resistor RX load between the first and the second terminals X and Y of the control input end.

Thus, after subtracting the voltage drop of about 0.1∼0.2 V (which can be omitted) across the first diode D1, the voltage VA at the node A is equal to VDC*[RX/(RA+RX)]. The voltage VA charges the capacitor C1 via the second resistor R2, thus creating a sensing signal to be input into the control circuit module 1 through the input end 11. The control circuit module 1 outputs a corresponding control signal from the output end 12. The control signal is then input to the optocoupler 2 via the input end 21. The optocoupler 2 outputs an operating signal from the output ends 23 and 24, which is then fed into the light source power supply circuit 4 through the input ends 41 and 42. The light source power supply circuit 4 then drives the light source 5 to emit light through the output ends 43 and 44.

Since a different resistor load RX creates a different sensing signal that is input to the control circuit module 1, this allows the light source 5 to emit lights of different brightness through the optocoupler 2 and the light source power supply circuit 4. As a result, by employing the circuit structure of the present invention, the external dimmer mechanism (the variable resistor) is capable of controlling the brightness of the light source 5 (a LED load).

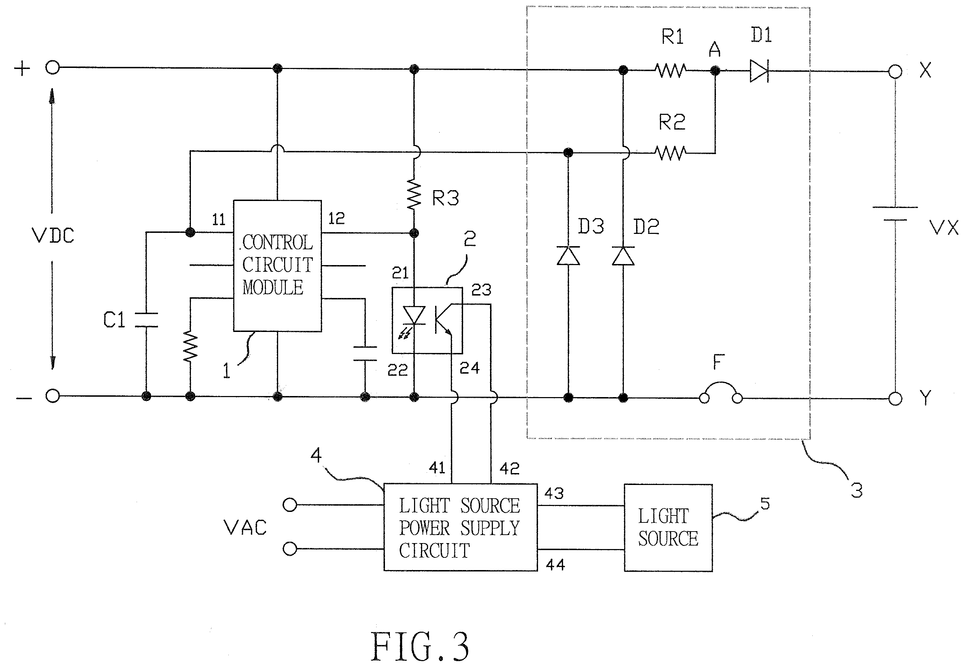

Referring now to FIG. 3, the circuit structure in accordance with the first embodiment of the present invention is connected to a dimmer circuit having a DC voltage drive characteristic. This can be regarded as adding a DC drive voltage VX between the first and the second terminals X and Y of the control input end. In the embodiment disclosed in this drawing, the voltage VX is connected in a forward-biased manner between the first and the second terminals X and Y of the control input end, that is, the positive terminal of the DC drive voltage VX is connected to the first terminal X, and the negative terminal of the DC drive voltage VX is connected to the second terminal Y.
a. When DC drive voltage VX < DC power supply VDC, the voltage at the node A (VA') is equal to VX+(0.1~0.2)V, and the voltage VA' at the node A charges the capacitor C1 through the second resistor R2, creating a sensing signal to be fed into the control circuit module 1 via the input end 11. The subsequent operations of making the light source 5 illuminate by driving the light source power supply circuit 4 through the optocoupler 2 are the same as the drive operations described with respect to FIG. 2.
b. When DC drive voltage VX > DC power supply VDC, the cathode voltage of the first diode D1 is VX, and the anode of the first diode D1 is VDC, since DC power supply VDC < DC drive voltage VX, the first diode D1 is not conducting. As a result, components such as the control circuit module 1, the optocoupler 2 and the light source power supply circuit 4 are protected from overvoltage.

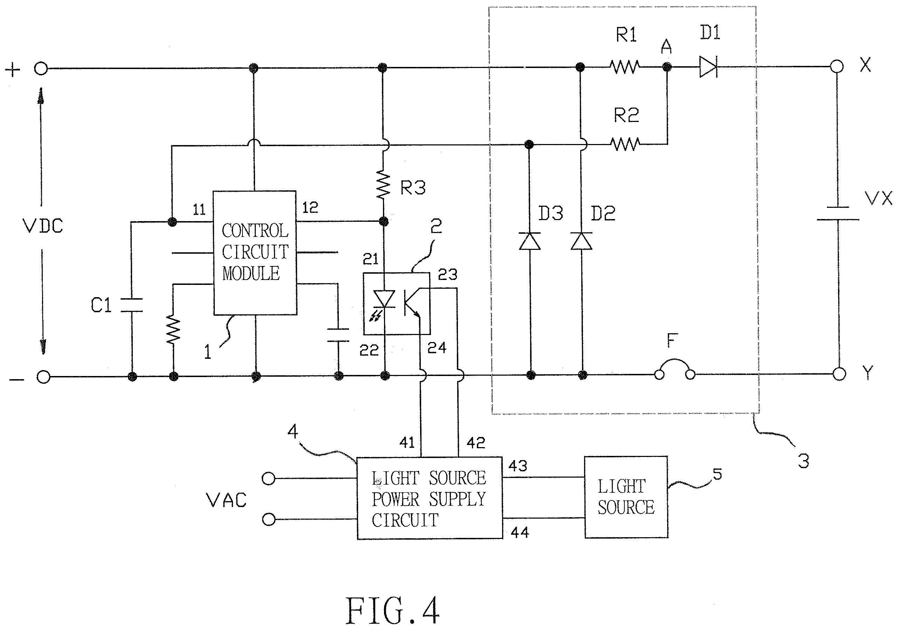

Referring now to FIG. 4, the circuit structure in accordance with the first embodiment of the present invention is connected to a dimmer circuit having a DC voltage drive characteristic. This can be regarded as adding a DC drive voltage VX between the first and the second terminals X and Y of the control input end. However, in the embodiment illustrated in this drawing, the voltage VX is connected in a reverse-biased manner between the first and the second terminals X and Y of the control input end, that is, the negative terminal of the DC drive voltage VX is connected to the first terminal X, and the positive terminal of the DC drive voltage VX is connected to the second terminal Y.
A. When DC drive voltage VX < DC power supply VDC, the cathode voltage of the second diode D2 is VDC, and the anode of the second diode D2 is VX, since DC power supply VDC > DC drive voltage VX, so the second diode D2 is not conducting. As a result, components such as the control circuit module 1, the optocoupler 2 and the light source power supply circuit 4 are protected from reverse bias.
B. When DC drive voltage VX > DC power supply VDC, the cathode voltage of the second diode D2 is VDC, and the anode of the second diode D2 is VX, since DC power supply VDC < DC drive voltage VX, the second diode D2 is conducting and current flows from the second terminal Y through the second diode D2, the first resistor R1, the first diode D1 to the first terminal X, and a loop is formed to protect the components such as the control circuit module 1 and the optocoupler 2 from overvoltage and reverse bias.

In practice, if the circuit structure in accordance with the first embodiment of the present invention is connected to a dimmer circuit having a PWM drive characteristic, this can be regarded as adding a PWM signal between the first and the second terminals X and Y of the control input end, and when the PWM signal is HI, then the voltage is VX'. The following scenarios may happen:
a. When HI voltage VX' of PWM signal < DC power supply VDC, and the voltage VX' is connected in a forward-biased manner between the first and the second terminals X and Y of the control input end (that is, the positive terminal of the voltage VX' is connected to the first terminal X, and the negative terminal of the voltage VX' is connected to the second terminal Y), then the voltage at the node A (VA") is equal to VX'+(0.1~0.2)V, the voltage VA" at the node A charges the capacitor C1 through the second resistor R2. When the PWM signal is switched to LO voltage, the capacitor C1 discharges. As a result, the input end 11 of the control circuit module 1 obtains an equivalent sensing signal (averaged DC voltage value), and the output end 12 of the control circuit module 1 outputs a corresponding control signal that can be fed into the optocoupler 2 via the input end 21. The optocoupler 2 outputs an operating signal from the output ends 23 and 24, which is then fed into the light source power supply circuit 4 through the input ends 41 and 42. The light source power supply circuit 4 then drives the light source 5 to emit light through the output ends 43 and 44.
   Therefore, different PWM signals generate different sensing signals that are input to the control circuit module 1, allowing the light source 5 to emit lights of different brightness through the optocoupler 2 and the light source power supply circuit 4. As a result, the external dimmer mechanism (the PWM signal) can be used to control the brightness of the light source 5 (a LED load) using the circuit structure of the present invention.
b. Assuming HI voltage VX' of PWM signal < DC power supply VDC, and the voltage VX' is connected in a reverse-biased manner between the first and the second terminals X and Y of the control input end; or HI voltage VX' of PWM signal > DC power supply VDC, then when the PWM signal is HI, the operations are similar to those described in relation to FIGs. 3 and 4, respectively, and will not be further described; when the PWM signal is switched to LO voltage, then none of the components is actuated. It is obvious that when the circuit structure of the present invention is applied in a PWM-drive dimmer circuit, protection against overvoltage and reversed polarities are also achieved.

In one implementation, depending on the needs, the above circuit of the present invention may include an overload protection element F between the second terminal Y of the control input end and the negative terminal of the DC power supply VDC. The overload protection element F may be a fuse or a thermistor with a positive temperature coefficient (PTC). As such, the overload protection element F cuts or blocks the connection between the circuit of the present invention and the dimmer circuit when abnormal temperature is present in order to prevent damage of the components caused by overheating.

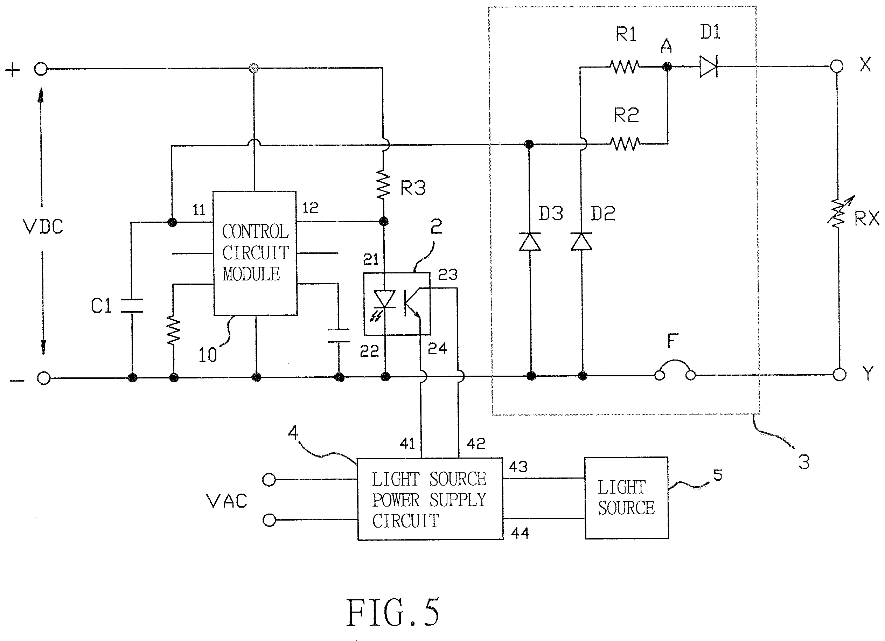

Referring to FIG. 5, a circuit structure in accordance with an example for understanding the present invention includes: a control circuit module 10, and an optocoupler 2 and a protection circuit 3 similar to those described in the first embodiment; the difference being that: the DC power supply VDC is not directly connected with the first resistor R1, and the control circuit module 10 is a circuit structure with built-in current source.

When the circuit structure in accordance with this example is connected with a dimmer mechanism having a variable resistive characteristic, this can be regarded as adding a (variable) resistor RX load between the first and the second terminals X and Y of the control input end. Meanwhile, the control circuit module 1 outputs a current I through the input end 11. The current I passes through the second resistor R2, the first diode D1 and the (variable) resistor RX. A voltage drop VX is created between the two ends of the (variable) resistor RX (VX=I*RX; when the resistance RX changes, the voltage VX changes accordingly), and a voltage VA' is created at the node A (VA'= VX+0.1∼0.2V).

The voltage VA' charges the capacitor C1 via the second resistor R2, thus creating a sensing signal that is input into the control circuit module 1 through the input end 11. The control circuit module 1 outputs a corresponding control signal from the output end 12. The control signal is then input to the optocoupler 2 via the input end 21. The optocoupler 2 outputs an operating signal from the output ends 23 and 24, which is then fed into the light source power supply circuit 4 through the input ends 41 and 42. The light source power supply circuit 4 then drives the light source 5 to emit light through the output ends 43 and 44. Therefore, another application aspect is formed.

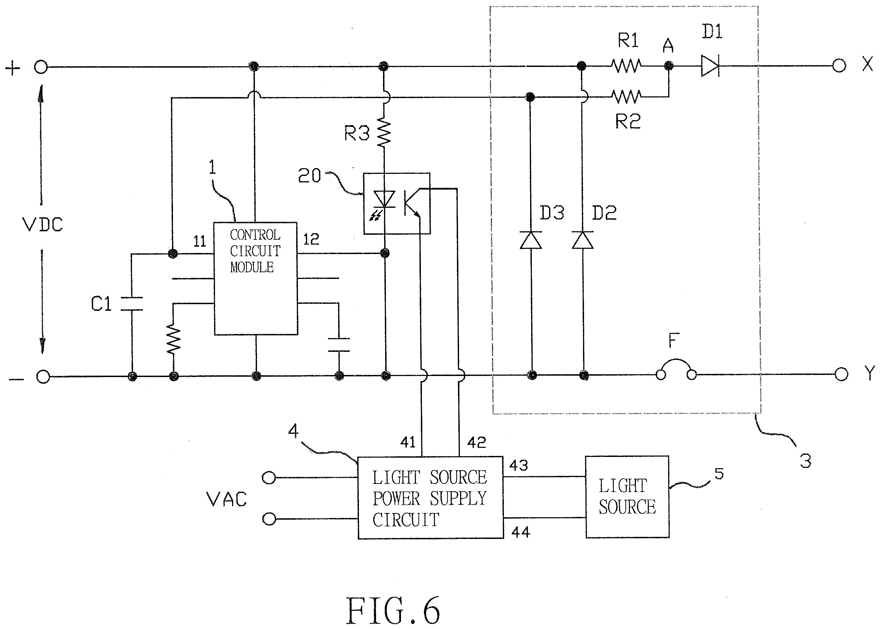

Referring to FIG. 6, a circuit structure in accordance with a further example for understanding the present invention includes: an optocoupler 20, and a control circuit module 1 and a protection circuit 3 similar to those described in the first embodiment; the difference being that: the two input ends of the optocoupler 20 are provided between the third resistor R3 and the output end 12 of the control circuit module 1. In this way, the optocoupler 20 can obtain a control signal in reverse polarity to that on the output end 12 of the control circuit module 1, so that the optocoupler 20 may also output a reversed operating signal, thus creating another type of operation.

In view of the above, the isolation dimmer circuit structure of the present invention allows either a variable resistor or a DC voltage source dimmer circuit to be used to control the illumination of LEDs, and it also reduces development and production costs while providing several types of protection.

## Claims

1. A circuit structure for receiving and converting control signals set by either a variable resistor (RX) or a DC voltage source (VX) connected between a first terminal (X) and a second terminal (Y) of the circuit structure for controlling a light source (5), wherein a light source power supply circuit (4) drives, via output ends (43, 44), the light source (5) to emit light, the circuit structure comprising:
a control circuit module (1) provided between a positive terminal and a negative terminal of a DC power supply, the control circuit module (1) including an input end (11) for receiving a sensing signal and an output end (12) for outputting a control signal;
a protection circuit (3) including a first resistor (R1) and a second resistor (R2), wherein one end of the first resistor (R1) is connected to the positive terminal of the DC power supply, while the other end of the first resistor (R1) is connected at a node A, the second resistor (R2) is provided between the node A and the input end (11) of the control circuit module (1),
**characterized in that** the circuit structure further comprises an optocoupler (2) including an input end (21) connected to the output end (12) of the control circuit module (1), the optocoupler (2) further including two output ends (23,24) connectable to input ends (41, 42) of the light source power supply circuit (4), output ends (43,44) of the light source power supply circuit (4) being connectable to the light source (5), wherein the optocoupler (2) receives and converts the control signal from the control circuit module (1) into an operating signal to be outputted, the operating signal is then receivable by the light source power supply circuit (4) to generate different outputs that allow changes in the brightness of the light source (5); and **in that**
the protection circuit (3) further includes a first diode (D1), a second diode (D2), and a third diode (D3), the other end of the first resistor (R1) is connected to the anode of the first diode (D1) at the node A, the cathode of the first diode (D1) is connected to the first terminal (X), the cathode of the second diode (D2) is connected to the positive terminal of the DC power supply, while the anode of the second diode (D2) is connected to the second terminal (Y), the cathode of the third diode (D3) is connected to the input end (11) of the control circuit module (1), while the anode of the third diode (D3) is connected to the second terminal (Y).

2. The circuit structure as claimed in claim 1, wherein the input end (11) of the control circuit module (1) is further connected to the negative terminal of the DC power supply via a capacitor (C1), such that the capacitor (C1) forms a RC circuit with the second resistor (R2).

3. The circuit structure as claimed in claim 1, wherein the protection circuit (3) further includes an overload protection element (F) provided between the second terminal (Y) and the negative terminal of the DC power supply.

4. The circuit structure as claimed in claim 1, wherein an overload protection element (F) is included between the second terminal (Y) and the negative terminal of the DC power supply and wherein the overload protection element (F) is a fuse.

5. The circuit structure as claimed in claim 1, wherein an overload protection element (F) is included between the second terminal (Y) and the negative terminal of the DC power supply and wherein the overload protection element (F) is a thermistor with a positive temperature coefficient.

6. The circuit structure as claimed in claim 1, wherein the light source (5) is a light emitting diode.

## Patentansprüche

1. Schaltkreisstruktur zum Empfangen und Umwandeln von Steuersignalen, die entweder durch einen variablen Widerstand (RX) oder eine DC-Spannungsquelle (VX) eingestellt werden, welche zwischen einem ersten Anschluss (X) und einem zweiten Anschluss (Y) der Schaltkreisstruktur zum Steuern einer Lichtquelle (5) angeschlossen ist, wobei eine Lichtquellen-Stromversorgungsschaltung (4) über Ausgangsenden (43, 44) die Lichtquelle (5) so steuert, dass sie Licht emittiert, wobei die Schaltkreisstruktur umfasst:
ein Steuerschaltungsmodul (1), das zwischen einem positiven Anschluss und einem negativen Anschluss einer DC-Stromversorgung liegt, wobei das Steuerschaltungsmodul (1) ein Eingabeende (11) zum Aufnehmen eines Abtastsignals und ein Ausgabeende (12) zum Ausgeben eines Steuersignals umfasst;
eine Schutzschaltung (3), die einen ersten Widerstand (R1) und einen zweiten Widerstand (R2) umfasst, wobei ein Ende des ersten Widerstandes (R1) mit dem positiven Anschluss der DC-Stromversorgung verbunden ist, während das andere Ende des ersten Widerstandes (R1) mit einem Knoten A verbunden ist, der zweite Widerstand (R2) zwischen dem Knoten A und dem Eingabeende (11) des Steuerschaltungsmoduls (1) vorgesehen ist,
**dadurch gekennzeichnet, dass** die Schaltkreisstruktur ferner umfasst
einen Optokoppler (2), der ein Eingabeende (21) enthält, das mit dem Ausgabeende (12) des Steuerschaltungsmoduls (1) verbunden ist, wobei der Optokoppler (2) ferner zwei Ausgabeenden (23, 24) enthält, die mit Eingabeenden (41, 42) der Lichtquellen-Stromversorgungsschaltung (4) verbunden werden können, wobei die Ausgabeenden (43, 44) der Lichtquellen-Stromversorgungsschaltung (4) mit der Lichtquelle (5) verbunden werden können, wobei der Optokoppler (2) das Steuersignal vom Steuerschaltungsmodul (1) empfängt und in ein Betriebssignal umwandelt, das ausgegeben werden soll, das Betriebssignal kann dann durch die Lichtquellen-Stromversorgungsschaltung (4) aufgenommen werden, um verschiedene Ausgaben zu erzeugen, die Änderungen in der Helligkeit der Lichtquelle (5) ermöglichen; und dadurch dass
die Schutzschaltung (3) ferner eine erste Diode (D1), eine zweite Diode (D2) und eine dritte Diode (D3) umfasst, das andere Ende des ersten Widerstandes (R1) mit der Anode der ersten Diode (D1) am Knoten A verbunden ist, die Katode der ersten Diode (D1) mit dem ersten Anschluss (X) verbunden ist, die Katode der zweiten Diode (D2) mit dem positiven Anschluss der DC-Stromversorgung verbunden ist, während die Anode der zweiten Diode (D2) mit dem zweiten Anschluss (Y) verbunden ist, die Katode der dritten Diode (D3) mit dem Eingabeende (11) des Steuerschaltungsmodul (1) verbunden ist, während die Anode der dritten Diode (D3) mit dem zweiten Anschluss (Y) verbunden ist.

2. Schaltkreisstruktur nach Anspruch 1, wobei das Eingabeende (11) des Steuerschaltungsmoduls (1) ferner mit dem negativen Anschluss der DC-Stromversorgung über einen Kondensator (C1) derart verbunden ist, dass der Kondensator (C1) eine RC-Schaltung mit dem zweiten Widerstand (R2) bildet.

3. Schaltkreisstruktur nach Anspruch 1, wobei die Schutzschaltung (3) ferner ein Überlastungsschutzelement (F) umfasst, das zwischen dem zweiten Anschluss (Y) und dem negativen Anschluss der DC-Stromversorgung vorgesehen ist.

4. Schaltkreisstruktur nach Anspruch 1, wobei ein Überlastungsschutzelement (F) zwischen dem zweiten Anschluss (Y) und dem negativen Anschluss der DC-Stromversorgung (DC) eingefügt ist, und wobei das Überlastungsschutzelement (F) eine Sicherung ist.

5. Schaltkreisstruktur nach Anspruch 1, wobei ein Überlastungsschutzelement (F) zwischen dem zweiten Anschluss (Y) und dem negativen Anschluss der DC-Stromversorgung (DC) eingefügt ist und wobei das Überlastungsschutzelement (F) ein Thermistor mit einem positiven Temperaturkoeffizienten ist.

6. Schaltkreisstruktur nach Anspruch 1, wobei die Lichtquelle (5) eine lichtemittierende Diode ist.

## Revendications

1. Structure de circuit destinée à recevoir et convertir des signaux de commande réglés par une résistance variable (RX) ou une source de tension CC (VX) branchée entre une première borne (X) et une deuxième borne (Y) de la structure de circuit pour commander une source de lumière (5), un circuit d'alimentation de source de lumière (4) pilotant, par le biais d'extrémités de sortie (43, 44), la source de lumière (5) pour émettre de la lumière, la structure de circuit comprenant :
un module de circuit de commande (1) disposé entre une borne positive et une borne négative d'une alimentation CC, le module de circuit de commande (1) comportant une extrémité d'entrée (11) destinée à recevoir un signal de détection et une extrémité de sortie (12) destinée à délivrer un signal de commande ;
un circuit de protection (3) comportant une première résistance (R1) et une deuxième résistance (R2), une extrémité de la première résistance (R1) étant branchée à la borne positive de l'alimentation CC, tandis que l'autre extrémité de la première résistance (R1) est branchée à un noeud A, la deuxième résistance (R2) étant disposée entre le noeud A et l'extrémité d'entrée (11) du module de circuit de commande (1),
**caractérisée en ce que** la structure de circuit comprend en outre
un optocoupleur (2) comportant une extrémité d'entrée (21) branchée à l'extrémité de sortie (12) du module de circuit de commande (1), l'optocoupleur (2) comportant en outre deux extrémités de sortie (23, 24) pouvant être branchées à des extrémités d'entrée (41, 42) du circuit d'alimentation de source de lumière (4), des extrémités de sortie (43, 44) du circuit d'alimentation de source de lumière (4) pouvant être branchées à la source de lumière (5), l'optocoupleur (2) recevant et convertissant le signal de commande provenant du module de circuit de commande (1) en un signal de fonctionnement devant être délivré, le signal de fonctionnement pouvant ensuite être reçu par le circuit d'alimentation de source de lumière (4) pour générer différentes sorties qui permettent des variations de la luminosité de la source de lumière (5) ; et **en ce que**
le circuit de protection (3) comporte en outre une première diode (D1), une deuxième diode (D2), et une troisième diode (D3), l'autre extrémité de la première résistance (R1) est branchée à l'anode de la première diode (D1) au noeud A, la cathode de la première diode (D1) est branchée à la première borne (X), la cathode de la deuxième diode (D2) est branchée à la borne positive de l'alimentation CC, tandis que l'anode de la deuxième diode (D2) est branchée à la deuxième borne (Y), la cathode de la troisième diode (D3) est branchée à l'extrémité d'entrée (11) du module de circuit de commande (1), tandis que l'anode de la troisième diode (D3) est branchée à la deuxième borne (Y).

2. Structure de circuit selon la revendication 1, dans laquelle l'extrémité d'entrée (11) du module de circuit de commande (1) est également branchée à la borne négative de l'alimentation CC par le biais d'un condensateur (C1), de sorte que le condensateur (C1) forme un circuit RC avec la deuxième résistance (R2).

3. Structure de circuit selon la revendication 1, dans laquelle le circuit de protection (3) comporte en outre un élément de protection contre les surcharges (F) disposé entre la deuxième borne (Y) et la borne négative de l'alimentation CC.

4. Structure de circuit selon la revendication 1, dans laquelle un élément de protection contre les surcharges (F) est incorporé entre la deuxième borne (Y) et la borne négative de l'alimentation CC et dans laquelle l'élément de protection contre les surcharges (F) est un fusible.

5. Structure de circuit selon la revendication 1, dans laquelle un élément de protection contre les surcharges (F) est incorporé entre la deuxième borne (Y) et la borne négative de l'alimentation CC et dans laquelle l'élément de protection contre les surcharges (F) est une thermistance avec un coefficient de température positif.

6. Structure de circuit selon la revendication 1, dans laquelle la source de lumière (5) est une diode électroluminescente.
